# EUROPÄISCHE PATENTSCHRIFT

(11) **EP 2 016 003 B1**
(45) Veröffentlichungstag und Bekanntmachung des Hinweises auf die Patenterteilung: **24.03.2010**
(21) Anmeldenummer: 07728690.4
(22) Anmeldetag: 01.05.2007
(51) Int. Cl.: B65D 47/20, F16K 17/04

(54) **SELBSTSCHLIESSENDES VENTIL MIT VENTILDECKEL**
SELF-LOCKING VALVE WITH VALVE CAP
VALVE AUTO-OBTURATRICE AVEC COUVERCLE DE VALVE

(30) Priorität: 08.05.2006 DE 102006021564
(43) Veröffentlichungstag der Anmeldung: 21.01.2009
(73) Patentinhaber: Kunststofftechnik Waidhofen an der Thaya GmbH, 3830 Waidhofen a.d. Thaya (AT)
(72) Erfinder: SUFFA, Udo, 96237 Ebersdorf Bel Coburg (DE); KÖBKE, Eberhard, 96364 Marktrodach (DE)
(74) Vertreter: Engel, Christoph Klaus
(86) Internationale Anmeldenummer: PCT/EP2007/054236
(87) Internationale Veröffentlichungsnummer: WO 2007/128741

(56) Entgegenhaltungen:
- DE-A1- 10 200 519
- GB-A- 2 122 586
- JP-A- 11 240 553

## Beschreibung

Die vorliegende Erfindung betrifft ein selbstschließendes Ventil mit einem Ventildeckel zur Ausgabe eines fließfähigen Produktes.

Eine typische Anwendung für selbstschließende Ventile sind Behältnisse, bei denen die Ausgabe eines fließfähigen Inhaltes durch eine Quetschung des Behältnisses erfolgt. Ein Beispiel hierfür sind so genannte Quetschflaschen für Körperpflegemittel. Durch die vom Benutzer bewirkte Reduzierung des Innenvolumens der Quetschflasche erhöht sich in dieser der Druck, sodass das enthaltene Produkt, beispielsweise eine Flüssigseife über das Ventil ausgegeben wird. Aufgrund der selbstschließenden Wirkung des Ventils ist verhindert, dass ohne diese Druckerhöhung Inhalt ungewollt austritt, auch wenn das Behältnis nicht mit einer Verschlusskappe verschlossen ist und selbst wenn das Produkt mit seiner Gewichtskraft auf dem Ausgabebereich des Ventils lastet.

Aus der DE 102 18 363 A1 ist ein selbstverschließendes Ventil zur Ausgabe eines flüssigen oder pastösen Produktes bekannt. Das Ventil umfasst eine Ventilmembran, die in Richtung des Produktes konvex geformt ist. Die Ventilmembran ist randseitig mit einem durch Umspritzen geformten Haltering gebildet. Für ein ordnungsgemäßes Ausgeben des Produktes wird die Ventilmembran mit einem Plattenteil unterfangen. Das Plattenteil wird wiederum mit Federarmen gehalten, woraus sich ein gesteigerter Bauaufwand für das Ventil ergibt. Ein weiterer Nachteil dieser Lösung ist, dass der Luftausgleich insbesondere durch das Plattenteil gehemmt ist, sodass das Behältnis eine große Rückstellkraft aufweisen muss.

Aus der DE 196 13 130 A1 ist ein selbstschließender Verschluss mit einer Verschlussmembran zur Ausgabe eines fluiden Füllgutes in einem komprimierbaren Behältnis bekannt. Die Verschlussmembran weist im unbetätigten Einbauzustand einen unteren Halterungsrand und eine obere sich im Wesentlichen in der Ausgaberichtung konkav erstreckende Verschlussdecke auf. Bei einem üblichen Spendevorgang öffnen sich Öffnungsschlitze in der Verschlussmembran ab einem bestimmten Druck zuverlässig und annähernd schlagartig. Bei der Beendigung des Spendevorganges kommt es zu einer Rückstellung des Behältnisses, sodass die Verschlussmembran in den konkaven Ausgangszustand zurückgezogen wird. Dabei erfolgt ein Durchbruch der Öffnungsschlitze nach innen, sodass Luft zurückgesaugt wird. Um die Luftrücksaugung zu verbessern, können Nuten zwischen der Verschlussmembran und deren Abstützung eingebracht sein. Nachteilig an dieser Lösung sind die begrenzte Dichtheit und der große Unterdruck, der zur Rücksaugung erforderlich ist. Um einen starken Rücksaugeffekt zu erzielen, müssen die Behältnisse mit entsprechender Federwirkung ausgebildet sein. Dies bedingt einen hohen Materialeinsatz für das Behältnis, wodurch die Herstellungskosten steigen.

Aus der EP 0 388 828 A1 ist ein selbstschließendes Ventil mit einer tellerförmigen Ventilmembran bekannt. Die Ventilmembran weist eine mittige Spendeöffnung auf, die auf einen Stützteller aufsetzt und dadurch abgedichtet wird. Diese Lösung weist keine Möglichkeit zur Luftrücksaugung auf.

Aus der DE 43 29 808 C2 ist ein selbstschließender Verschluss für einen Behälter oder eine Tube bekannt, bei dem eine Austrittsöffnung in einer Verschlussdecke durch einen Verschlusszapfen verschlossen ist. Bei einer Druckerhöhung wird der Verschlusszapfen nach innen gedrückt, sodass die Austrittsöffnung freigegeben wird und das Produkt durch die Austrittsöffnung austreten kann. Nachteilig an dieser Lösung ist, dass ein großer Druck erforderlich ist, damit der Verschlusszapfen die Austrittsöffnung freigibt. Außerdem weist diese Lösung keine Möglichkeit zur Luftrücksaugung auf, sodass sie nur für bestimmte Produkte geeignet ist. Aufgrund des vergleichsweise hohen Fertigungsaufwandes ist diese Lösung für die Produktion von Massengütern wenig geeignet.

Aus der DE 195 80 254 B4 ist ein selbstschließendes Ventil mit einer nach innen gewölbten Ventilmembran bekannt. Die Ventilmembran weist wiederum eine mittige Spendeöffnung auf, die auf einen Stützteller aufsetzt und dadurch abgedichtet wird, Nach oben wird die Ventilmembran durch einen Halterungsflansch gehalten, an dem die Ventilmembran in einem radial äußeren Anlagebereich von unten anliegt. Auf dem Stützteller kann ein Zapfen ausgebildet sein, der in der Verschlussstellüng in die Spendeöffnung einfährt und so eine zuverlässige Abdichtung ermöglicht. Der seitliche Anlagebereich der Ventilmembran kann so ausgeführt sein, dass er sich bei Unterdruck nach innen verformt, wodurch ein Luftweg für die Rücksaugung freigegeben wird. Eine solche Verformung setzt jedoch einen großen Unterdruck voraus, sodass die Wandung des Behältnisses entsprechend große Rückstellkräfte aufbringen muss.

Aus der DE 102 00 519 A1 ist ein Ventil zur Applikation von flüssigen bzw. in Flüssigkeiten gelösten Arzneistoffen bekannt, welches einen Aufnahmekörper aufweist, in welchem ein Austragskanal für die Flüssigkeit und ein Belüftungskanal ausgebildet ist. Im Aufnahmekörper ist eine elastisch verformbare Membran angeordnet, die sowohl den Austragkanal als auch den Belüftungskanal abdichtend verschließt. Bei der in der DE 102 00 519 A1 gezeigten Ausführungsform tritt der Belüftungskanal auf dem seitlichen Umfang des Verschlusses nach außen.

Aus der GB 2 122 586 A ist ein Ausgabeverschluss für Quetschflaschen bekannt. Innerhalb des Verschlusses ist eine Platte angeordnet, die eine erste röhrenförmige Hülse trägt. In die erste röhrenförmig Hülse ragt, eine zweite röhrenförmig Hülse eines Deckels. Zwischen dem Deckel und der Platte ist eine Ventilmembran angeordnet. Wirkt ein Druck auf die Quetschflasche, so strömt das Medium durch Öffnungen in der Platte auf die Ventilmembran, wodurch diese angehoben wird. Das Medium gelangt dann durch Öffnungen in den beiden röhrenförmigen Hülsen nach außen. Bei einer alternativen Ausführungsform der in der GB 2 122 586 A gezeigten Lösung sitzt die Ventilmembran mit ihrer Öffnung auf einem Ventilsitz. Drückt das Medium vom Fläscheninneren auf die Ventilmembran, so hebt diese vom Ventilsitz ab, sodass das Medium wischen der Ventilmembran und dem Ventilsitz nach außen dringen kann.

Die JP11-240553 zeigt einen Verschluss für eine Flasche, die zunächst einen-zylinderförmigen Abschnitt aufweiset, welcher in einen Flaschenhals übergeht. Der Verschluss weist einen Haltezylinder auf, mit welchem der Verschluss auf dem Flaschenhals sitzt. Innerhalb des Verschlusses ist eine Halteplatte angeordnet, auf der ein Ventilzylinder sitzt. Auf den Ventilzylinder ist eine elastische Kappe aufgesteckt, die in der Mitte ihrer oberen Deckfläche eine Lutteintrittsöffnung aufweist. Die elastische Kappe wird von einer sich verjüngenden Düse umschlossen, die nur eine Deckfläche der elastischen Kappe freigibt. Gelangt das Medium aus der Flasche in den Bereich des Verschlusses, so tritt es durch Öffnungen in der Halteplatte und der elastischen Kappe in einen Bereich zwischen der elastischen Kappe und der Düse, woraufhin es durch eine zwischen der elastischen Kappe und der Düse gebildeten Austrittsöffnung nach außen tritt. Wirkt im Inneren der Flasche ein Unterdruck, so tritt von außen Luft in die Lufteintrittsöffnung ein, welche einen zwischen dem Ventilzylinder und der elastische Kappe gebildeten Kanal und einen zwischen der Halteplatte und der elastische Kappe gebildeten Kanals dürchströmt, um anschließend durch die Öffnung der Halteplatte in das Innere der Flasche zu gelangen.

Die Aufgabe der vorliegenden Erfindung besteht somit darin, ein selbstschließendes Ventil zur Ausgabe eines fließfähigen Produktes bereitzustellen, welches sehr einfach und kostengünstig herzustellen ist und nur einen geringen Unterdruck zur Luftrücksaugung erfordert. Außerdem ist eine gute Dichtwirkung des Ventils gewünscht, um das ungewollte Entweichen auch von geringen Mengen des fließfähigen Produktes sicher zu vermeiden.

Diese Aufgabe wird gelöst durch ein selbstschließendes Ventil gemäß dem beigefügten Anspruch 1. Dabei wechselt eine Ventilmembran zur Ausgabe des Produktes aus einer Verschlussstellung in eine Spendestellung. In der Verschlussstellung ist eine Austrittsöffnung eines Ventildeckels durch die Ventilmembran verschlossen. In der Spendestellung ist die Ventilmembran von dem Ventildeckel abgehoben, sodass das Produkt nach außen treten kann. In einer Rücksaugstellung tritt Luft von außen durch die Austrittsöffnung und eine Führungsöffnung der Ventilmembran zwischen die Ventilmembran und einen Führungsteller, sodass sie zum bevorrateten Volumen gelangt.

Ein besonderer Vorteil dieser Erfindung besteht darin, dass gleichzeitig eine sehr vereinfachte Bauform und eine deutlich verbesserte Luftrücksaugung erreichbar sind. Die Ventilmembran kann durch eine einfache Kunststoffscheibe gebildet sein, die sehr kostengünstig produziert werden kann. Ein Behältnis mit einem erfindungsgemäßen Ventil muss keine großen Rückstellkräfte aufweisen. Die Wandung des Behältnisses kann demzufolge dünn ausgeführt sein, sodass durch die Verwendung des erfindungsgemäßen Ventils eine materialsparende und kostengünstige Produktion des Behältnisses ermöglicht wird.

Weitere Vorteile, Einzelheiten und Weiterbildungen der Erfindung ergeben sich aus den nachfolgenden Beschreibungen mehrerer Ausführungsformen, unter Bezugnahme auf die Zeichnungen. Es zeigen:
- Fig. 1: eine Querschnittsdarstellung einer ersten Ausführungsform eines erfindungsgemäßen selbstschließenden Ventils in einer Verschlussstellung;
- Fig. 2: eine Querschnittsdarstellung des in Fig. 1 gezeigten Ventils in einer Spendestellung;
- Fig. 3: eine Querschnittsdarstellung des in Fig. 1 gezeigten Ventils in einer Rücksaugstellung;
- Fig. 4: eine Querschnittsdarstellung einer zweiten Ausführungsform eines erfindungsgemäßen selbstschließenden Ventils in einer Verschlussstellung;
- Fig. 5: eine Querschnittsdarstellung des in Fig. 4 gezeigten Ventils in einer Spendestellung;
- Fig. 6.: eine Querschnittsdarstellung des in Fig. 4 gezeigten Ventils in einer Rücksaugstellung;
- Fig. 7: eine Querschnittsdarstellung einer dritten Ausführungsform eines erfindungsgemäßen selbstschließenden Ventils in einer Verschlussstellung;
- Fig. 8: eine Querschnittsdarstellung des in Fig. 7 gezeigten Ventils in einer Spendestellung;
- Fig. 9: eine Querschnittsdarstellung des in Fig. 7 gezeigten Ventils in einer Rücksaugstellung;
- Fig. 10: eine Querschnittsdarstellung einer vierten Ausführungsform eines erfindungsgemäßen selbstschließenden Ventils in einer Verschlussstellung;
- Fig. 11: eine Querschnittsdarstellung des in Fig. 10 gezeigten Ventils in einer Spendestellung; und
- Fig. 12: eine Querschnittsdarstellung des in Fig. 10 gezeigten Ventils in einer Rücksaugstellung.

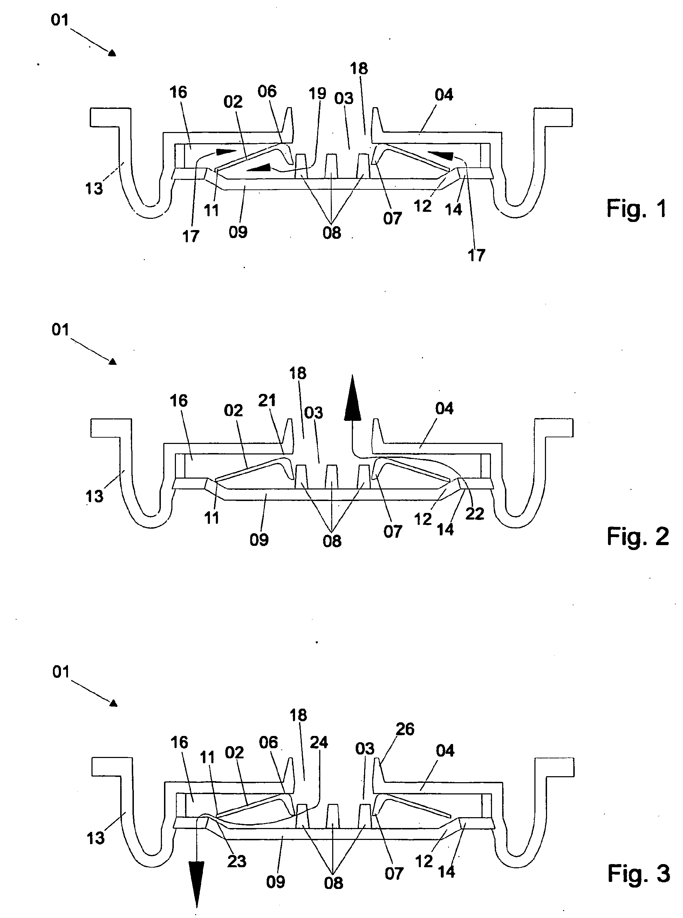

Fig. 1 zeigt eine Querschnittsdarstellung einer ersten Ausführungsform eines erfindungsgemäßen selbstschließenden Ventils 01 in einer Verschlussstellung. Generell ist zum Verständnis der Figuren anzumerken, dass das Ventil 01 für die Montage auf einem Behälter (nicht gezeigt) konfiguriert ist, beispielsweise durch Einsetzen in den Hals einer Quetschflasche.

Das Ventil 01 umfasst eine kreisrunde Ventilmembran 02 mit einer kreisrunden mittigen Führungsöffnung 03. Die Ventilmembran 02 hat im Wesentlichen die Form einer Tellerfeder und zeigt auch vergleichbare Federeigenschaften. Die Ventilmembran 02 ist in Fig. 1 in einer Stellung gezeigt, wenn das Ventil 01 verschlossen ist. In dieser Verschlussstellung wird die Ventilmembran 02 mit dem Umfang ihrer Führungsöffnung 03 an einen Ventildeckel 04 angepresst. Eine dadurch gebildete runde Auflagefläche 06 dichtet die Ventilmembran 02 gegenüber dem Ventildeckel 04 ab. Auf der der Auflagefläche 06 gegenüberliegenden Seite der Ventilmembran 02 weist die Führungsöffnung 03 einen umlaufenden Haltekragen 07 auf. Der Haltekragen 07 liegt mit Spiel an vier Führungszapfen 08 an, durch welche die Ventilmembran 02 seitlich geführt ist. Die vier Führungszapfen 08 sind auf einem Führungsteller 09 angeordnet. Der äußere Umfang der Ventilmembran 02 ist durch eine umlaufende Kante 11 gebildet. Die umlaufende Kante 11 liegt in der gezeigten Verschlussstellung auf einer schrägen, umlaufenden Auflauffläche 12 des Führungstellers 09 auf. Der Führungsteller 09 und der Ventildeckel 04 sind fest mit einem runden Befestigungsrahmen 13 des Ventils 01 verbunden.

Die Form der Ventilmembran 02 ist in der Verschlussstellung in die Ausgaberichtung gewölbt und hat, ausgenommen des Haltekragens 07, die Form eines Kegelstumpfmantels. Die Ventilmembran 02 ist elastisch verformbar, wobei durch die Kegelstumpfform und den Haltekragen 07 eine Vorspannung eingeprägt ist, welche die Verformbarkeit bestimmt. Eine seitliche Bewegung der Ventilmembran 02 ist durch die vier Führungszapfen 08 verhindert. Die Ventilmembran 02 wird einerseits durch die Auflage in der Auflagefläche 06 auf dem Ventildeckel 04 und anderseits durch die Auflage der umlaufenden Kante 11 auf dem Führungsteller 09 gehalten. Folglich ist die Ventilmembran 02 klemmend zwischen dem Ventildeckel 04 und dem Führungsteller 09 gehalten. Es bedarf keiner weiteren Befestigungsmittel zur Montage der Ventilmembran 02. In der gezeigten Ausführung gehen die Führungszapfen 08 und der Führungsteller 09 einschließlich dessen schräger Auflauffläche 12 einstückig ineinander über, wodurch eine einfache Herstellung möglich ist. Diese Bestandteile können aber auch mehrstückig ausgeführt sein. In der gezeigten Ausführung wird eine seitliche Verschiebung der Ventilmembran 02 mit vier Führungszapfen 08 verhindert. Selbstverständlich kann auch eine andere Anzahl an Führungszapfen 08 gewählt werden oder die Führungszapfen 08 können am Ventildeckel 04 angeordnet werden. Eine seitliche Verschiebung der Ventilmembran 02 kann auch mit anderen Führungsmitteln verhindert werden. Beispielsweise kann eine Scheibe mit Öffnungen in der Führungsöffnung 03 angeordnet werden.

Durch die Ausbildung des Haltekragens 07 an der Ventilmembran 02 ist die Ventilmembran 02 im Bereich der Auflagefläche 06 verstärkt. Hierdurch ist gewährleistet, dass die sich in der Verschlussstellung bildende Auflagefläche 06 einen Hohlraum 16 dicht abschließt, welcher zwischen dem Ventildeckel 04 und der Ventilmembran 02 verbleibt.

Der Führungsteller 09 weist in seinem peripheren Bereich Durchtrittsöffnungen 14 auf, durch die das Produkt oder Luft aus dem Behältnis in den Hohlraum 16 zwischen der Ventilmembran 02 und dem Ventildeckel 04 treten kann. Das in Richtung 17 aus dem Volumen des Behälters fließende Produkt oder auch die dort vorhandene Luft können in der gezeigten Verschlussstellung nicht austreten, da im Bereich der Auflagefläche 06 kein Produkt und keine Luft zwischen die Ventilmembran 02 und den Ventildeckel 04 dringen kann. Da die Ventilmembran 02 elastisch gegen den Ventildeckel 04 gepresst ist, führen kleine Druckerhöhungen im Inneren des Behältnisses noch nicht dazu, dass das Produkt oder die Luft zwischen der Ventilmembran 02 und den Ventildeckel 04 hindurch den Hohlraum 16 verlassen kann. Beispielsweise ist während des Öffnens und während des Verschließens einer Quetschflasche mit einer Verschlusskappe die Quetschflasche fest anzufassen. Dabei wird der Innendruck in der Flasche leicht erhöht, jedoch ist keine Ausgabe des Produktes gewünscht, was durch das erfindungsgemäße Ventil 01 gewährleistet ist.

Die außerhalb des Behältnisses vorhandene Luft kann durch einen Kanal, der durch eine Austrittsöffnung 18 im Ventildeckel 04, durch die Führungsöffnung 03 der Ventilmembran 02, durch die beabstandeten Führungszapfen 08 und durch den Bereich zwischen der Ventilmembran 02 und dem Führungsteller 09 gebildet ist, gelangen. Die in Richtung 19 strömende Luft kann jedoch nicht in das Innere des Behältnisses gelangen, da die Ventilmembran 02 mit ihrer umlaufenden Kante 11 auf dem Führungsteller 09 aufliegt. Da es keinen merklichen Druckunterschied zwischen dem Inneren und dem Äußeren des Behältnisses gibt, kann die Luft nicht zwischen der Ventilmembran 02 und dem Führungsteller 09 hindurch in den Hohlraum 16 dringen.

Das selbstschließende Ventil 01 ist insbesondere für so genannte Quetschflaschen geeignet, bei denen durch eine manuelle Quetschung der Flasche das fließfähige Produkt ausgegeben wird. Das Ventil 01 wird hierzu in der für die Ausgabe vorgesehenen Öffnung der Flasche angeordnet. Die in Fig. 1 gezeigte Ausführungsform des erfindungsgemäßen Ventils wird dazu mit ihrem runden Befestigungsrahmen 13 in die Öffnung der Flasche eingesetzt. Das erfindungsgemäße Ventil kann aber auch als integraler Bestandteil des Behältnisses ausgeführt sein.

Fig. 2 zeigt eine Querschnittsdarstellung des in Fig.1 gezeigten Ventils 01 in einer Spendestellung. Die Fig. 2 zeigt dieselben Bestandteile wie Fig. 1 unter Verwendung derselben Bezugszeichen. Die Spendestellung dient der Ausgabe des Produktes aus dem Behältnis. Bei einer Quetschflasche wird die Spendestellung durch ein Quetschen der Flasche erzielt. Hierzu wird die Quetschflasche üblicherweise so gehalten, dass die Öffnung mit dem Ventil nach unten zeigt. Die Spendestellung nimmt das Ventil 01 dann ein, wenn der Druck im Innern des Behältnisses so groß geworden ist, dass der im Hohlraum 16 auf die Ventilmembran 02 wirkende Druck eine Verformung der Ventilmembran 02 in Richtung des Führungstellers 09 bewirkt hat. Die Kegelstumpfform der Ventilmembran 02 ist durch diese Verformung leicht abgeflacht. Die Ventilmembran 02 liegt nun nicht mehr an dem Ventildeckel 04 an, sodass sich eine Durchtrittsspalt 21 gebildet hat. Das im Hohlraum 16 befindliche Produkt oder auch dort befindliche Luft können nun durch den Durchtrittsspalt 21 und durch die Austrittsöffnung 18 nach außen gelangen. Ein Richtungspfeil 22 verdeutlicht die Fließrichtung des Produktes. Da der Durchtrittsspalt 21 umlaufend um die Führungsöffnung 03 ausgebildet ist, weist der Durchtrittsspalt 21 einen ausreichend großen Querschnitt für den Durchfluss des Produktes auf. Die Größe der Führungsöffnung 03 bestimmt bei dieser Ausführungsform die Größe des Durchtrittsspaltes 21 und somit gemeinsam mit der Größe der Austrittsöffnung 18 die Durchflussmenge und -geschwindigkeit des Produktes.

Für den Wechsel von der Verschlussstellung in die Spendestellung muss die Kraft, mit der die Ventilmembran 02 gegen den Ventildeckel 04 gepresst wird, überwunden werden. Daher ist für die Ausgabe des Produktes die Kraft auf eine Quetschflasche so lange zu erhöhen, bis das Ventil 01 in die Spendestellung wechselt. Dies hat zur Folge, dass sich die Quetschflasche während dieses Vorganges schlagartig entspannt, sobald der durch die Quetschung eingeprägte Überdruck abgebaut ist. In diesem Moment wird eine bestimmte Menge des Produktes ausgegeben. Das Ventil 01 und die Quetschflasche können so dimensioniert werden, dass die schlagartig ausgegebene Produktmenge der typischen Verbrauchsmenge des Produktes entspricht. So kann der Benutzer intuitiv die typische Verbrauchsmenge des Produktes ausgeben. Ist eine größere Ausgabemenge gewünscht, so ist nach dem Wechsel des Ventils 01 in die Spendestellung die Flasche weiterhin zu quetschen. Da die Kraft zum Wechsel in die Spendestellung bereits überwunden ist, bedarf es weniger Anstrengung, größere Mengen des Produktes auszugeben. Das Überschreiten des Kraftmaximums für den Wechsel in die Spendestellung ist für den Benutzer spürbar und durch den Austritt des Produktes oder der Luft auch hörbar. Dies verbessert die Bedienungseigenschaften, insbesondere das taktile Handling der mit dem erfindungsgemäßen Ventil ausgerüsteten Quetschflasche.

Sinkt die auf die Flasche eingeprägte Kraft unter eine bestimmte Schwelle, legt sich die Ventilmembran 02 wieder an den Ventildeckel 04 an, sodass das Ventil 01 in die Verschlussstellung zurückfällt. Durch die kreisförmige konzentrische Ausführung der Ventilmembran 02 und die in die Ventilmembran 02 eingeprägte Spannung erfolgt der Rückfall in die Verschlussstellung wiederum schlagartig. Damit ist ein definierter Verschlussmoment gegeben, der zu einem sauberen Abschneiden des ausgepressten Flüssigkeitsstrahls führt, sodass ein Nachtropfen weitgehend vermieden wird.

Wenn das Ventil 01 nach erfolgter Ausgabe des Produktes in die Verschlussstellung gewechselt hat, ist der erhöhte Innendruck durch die Ausgabe des Produktes abgebaut. Die Ventilmembrane 02 hat zu diesem Zeitpunkt wieder ihre Ausgangsform und -position eingenommen. Dies ist beispielsweise dann gegeben, wenn der Benutzer die Kraft zur Quetschung der Flasche zurückgenommen hat, sodass das Produkt nicht mehr ausgegeben wird, jedoch die Kraft immer noch so groß ist, dass die Verformung der Flasche noch erhalten bleibt. In diesem Zustand ist das Volumen der Flasche kleiner als das Volumen der unverformten Flasche. Wird die Kraft zur Verformung der Flasche vollständig zurückgenommen, wirken die elastischen Rückverformungskräfte der Wandung. Da das Volumen der Flasche während dieses Momentes verkleinert ist, entsteht ein Unterdruck in der Flasche, sodass das Ventil 01 in eine Rücksaugstellung wechselt.

Fig. 3 zeigt eine Querschnittsdarstellung des in Fig. 2 gezeigten Ventils 01 in der Rücksaugstellung. Die Fig. 3 zeigt dieselben Bestandteile wie Fig. 1 unter Verwendung. derselben Bezugszeichen. In der gezeigten Rücksaugstellung hat der Unterdruck in der Flasche bewirkt, dass der äußere Überdruck der Luft im Bereich zwischen der Ventilmembran 02 und dem Führungsteller 09 die Ventilmembran 02 verformt hat. Auf Grund dieser Verformung ist die Ventilmembran 02 gegenüber dem Führungsteller 09 im Bereich der umlaufenden Kante 11 abgehoben, wodurch sich ein umlaufender Luftspalt 23 gebildet hat. Die Kegelstumpfform der Ventilmembran 02 ist gegenüber der Verschlussstellung wiederum leicht abgeflacht. Da der umfängliche Randbereich der Ventilmembran 02 im Bereich der umlaufenden Kante 11 nicht abgestützt und nicht durch eine Versteifung oder eine ähnliche Gestaltung verstärkt ist, bedarf es nur einer sehr kleinen Kraft für die Bildung des umlaufenden Luftspaltes 23. Folglich ist durch das erfindungsgemäße Ventil 01 eine Luftrücksaugung bereits bei einem sehr kleinen Unterdruck möglich. Die Luft kann von außen durch den Kanal, der durch die Austrittsöffnung 18, durch die Führungsöffnung 03, durch die beabstandeten Führungszapfen 08, durch den Bereich zwischen der Ventilmembran 02 und dem Führungsteller 09 und durch den umlaufenden Luftspalt 23 gebildet ist, schließlich durch den Hohlraum 16 und durch die Durchtrittsöffnungen 14 in das Innere des Behältnisses gelangen. Diese Luftströmung ist mit einem Pfeil 24 angedeutet. Da der Luftspalt 23 umlaufend ausgebildet ist, weist der Luftspalt 23 einen ausreichend großen Querschnitt zur Luftrücksaugung auf. Die Luft kann nahezu ungehindert von außen nach innen strömen und den dort vorhandenen Unterdruck abbauen. Sobald der Unterdruck vollständig abgebaut ist, liegt die Quetschflasche wieder in ihrer Ausgangsform vor. Durch den umlaufenden Spalt 23 ist eine ausreichende Luftrücksaugung auch dann gewährleistet, wenn Abschnitte des Spaltes 23 noch durch zurückgebliebene Anteile des auszugebenden Produktes verschlossen sind. Durch die Rücksaugwirkung werden aber auch diese Anteile des Produktes in das Innere der Flasche zurückgesaugt. Dies gilt ebenfalls für Anteile des Produktes, die im Bereich der Austrittsöffnung 18 oder im Bereich der Führungszapfen 08 zurückgeblieben sind, da auch dort eine Rücksaugwirkung gegeben ist.

Der Ventildeckel 04 weist umlaufend um die Austrittsöffnung 18 einen Rohransatz 26 auf. Dieser Rohransatz 26 ist vorteilhaft, damit das ausgegebene Produkt zu dem gewünschten Zielort gelangt, sodass keine Produktanteile auf dem Ventildeckel 04 im Bereich der Austrittsöffnung 18 verbleiben. Insofern zum Ende des Ausgabevorganges am Rohransatz 26 Produktanteile verbleiben, können diese beispielsweise an der Hand abgestreift werden. Zudem schützt der Rohransatz 26 das Innere des Ventils 01.

Das erfindungsgemäße Ventil besteht in der näher dargestellten Ausführungsform aus lediglich drei Teilen. Dies ermöglicht eine einfache und schnelle Montage, da lediglich die Ventilmembran 02 und der Führungsteller 09 mit einem Stempel in den Befestigungsrahmen 13 eingedrückt werden müssen. Der Führungsteller 09 wird vorzugsweise mit einer Rastverbindung im Ventildeckel 04 oder im Befestigungsrahmen 13 befestigt ist. Die Ventilmembran 02 kann vorzugsweise aus Silikon oder einem vergleichbaren weichelastischen Kunststoff bestehen, während der Befestigungsrahmen 13 als Spritzgussteil aus einem steiferen Kunststoff gefertigt sein kann.

Der Befestigungsrahmen 13 einschließlich des Ventildeckels 04 kann bei einer abgewandelten Ausführung auch einstückig mit der Quetschflasche oder einem ähnlichen Behälter ausgebildet sein.

In einer abgewandelten Ausführungsform erfolgt die seitliche Führung der Ventilmembran 02 durch Führungselemente, welche an der umlaufenden Kante 11 der Ventilmembran 02 mit Spiel anliegen. In dieser Ausführungsform kann auf Führungsmittel, die in die Führungsöffnung 03 hineinragen, verzichtet werden.

Zweckmäßigerweise wird das Ventil bei Nichtgebrauch noch von einer Verschlusskappe (nicht gezeigt) abgedeckt, die in bekannter Weise an der Quetschflasche angebracht ist. Die Verschlusskappe ist vorteilhaft mit einem Zapfen versehen, der in den Rohransatz 26 eintritt und diesen verschließt.

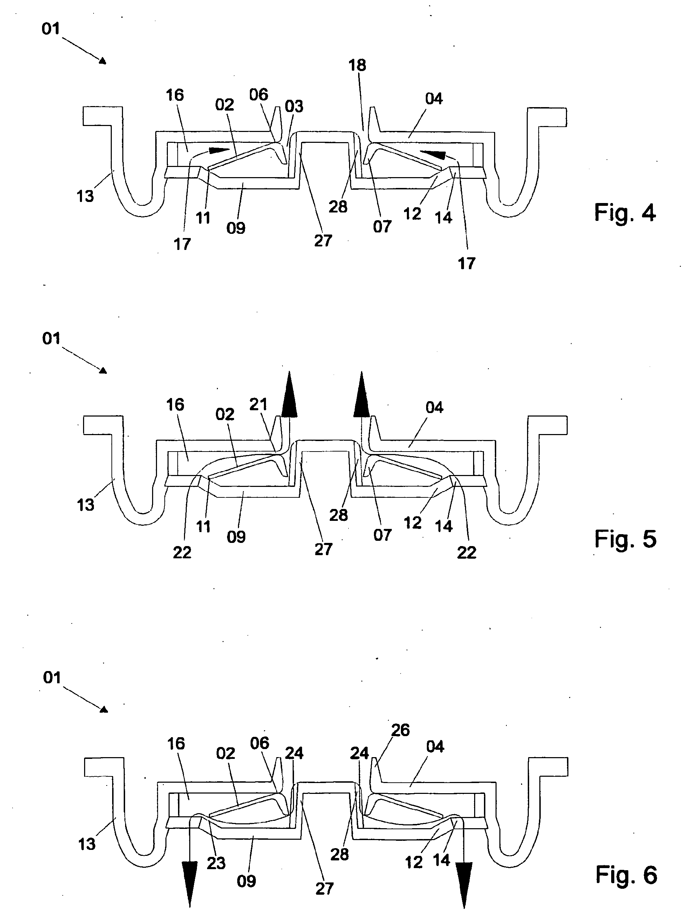

Die Fig. 4 bis 6 zeigen Querschnittsdarstellungen einer zweiten Ausführungsform des erfindungsgemäßen selbstschließenden Ventils 01. Fig. 4 zeigt das Ventil 01 in einer Verschlussstellung. Fig. 5 zeigt das Ventil 01 in einer Spendestellung und Fig. 6 zeigt das Ventil 01 in einer Rücksaugstellung. Die in den Fig. 4 bis 6 verwendeten Bezugszeichen stimmen mit den in den Fig. 1 bis 3 verwendeten Bezugszeichen überein, insofern sie die gleichen Merkmale kennzeichnen. Die in den Fig. 4 bis 6 gezeigte Ausführungsform unterscheidet sich von der in den Fig. 1 bis 3 gezeigten Ausführungsform nur dahingehend, dass sie statt der vier Führungszapfen einen genuteten Führungszapfen 27 aufweist. Der genutete Führungszapfen 27 ist einstückig mit dem Führungsteller 09 ausgebildet. Der genutete Führungszapfen 27 ist innen hohl, wodurch Material eingespart wird. Die Mantelfläche des Führungszapfens 27 weist mehrere Nuten 28 auf, die sich von dem Bereich der Austrittsöffnung 18 bis zum Führungsteller 09 erstrecken. Der genutete Führungszapfen 27 weist die gleichen Funktionen wie die in den Fig. 1 bis 3 gezeigten vier Führungszapfen auf. Zum einen verhindert der genutete Führungszapfen 27 eine seitliche Bewegung der Ventilmembran 02. Zum anderen bilden die Nuten 28 des Führungszapfens 27 einen Teil des Kanals zur Luftrücksaugung, da Luft von außen durch die Austrittsöffnung 18 durch die Nuten 28 hindurch in den Bereich zwischen dem Führungsteller 09 und der Ventilmembran 02 dringen kann.

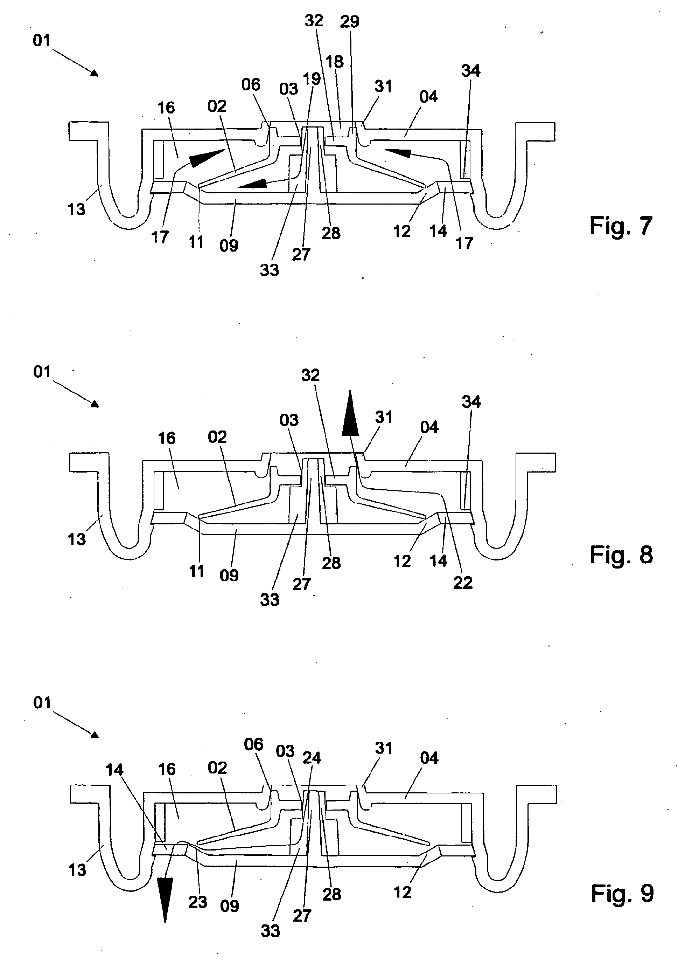

Die Fig. 7 bis 9 zeigen Querschnittsdarstellungen einer dritten Ausführungsform des erfindungsgemäßen selbstschließenden Ventils 01. Fig. 7 zeigt das Ventil 01 in einer Verschlussstellung. Fig. 8 zeigt das Ventil 01 in einer Spendestellung und Fig. 9 zeigt das Ventil 01 in einer Rücksaugstellung. Die in den Fig. 7 bis 9 verwendeten Bezugszeichen stimmen mit den in den Fig. 1 bis 6 verwendeten Bezugszeichen überein, insofern sie die gleichen Merkmale kennzeichnen.

Die in den Fig. 7 bis 9 gezeigte Ausführungsform unterscheidet sich von der in den Fig. 4 bis 6 gezeigten Ausführungsform dahingehend, dass die Ventilmembran 02 eine konzentrisch angeordnete Dichtlippe 29 aufweist, welche einer konisch geformten Innenfläche einer Buchse 31 der Austrittsöffnung 18 des Ventildeckels 04 gegenübersteht. Da die Dichtlippe 29 der Ventilmembran 02 klemmend in die konische Buchse 31 hineinragt und so die Dichtlippe 29 an die Innenfläche der Buchse 31 gepresst wird, ist insbesondere in der Verschlussstellung eine sichere Abdichtung des Hohlraumes 16 in der Auflagefläche 06 gewährleistet. Die Ventilmembran 02 weist statt eines Haltekragens eine Führungsscheibe 32 auf, in deren Zentrum die Führungsöffnung 03 angeordnet ist. Der genutete Führungszapfen 27 greift wiederum in die Führungsöffnung 03 ein und gewährleistet so die Führung der Ventilmembran 02. Da die Führungsöffnung 03 aufgrund ihrer Anordnung in der Führungsscheibe 32 kleiner als bei der in den Fig. 4 bis 6 gezeigte Ausführungsform ist, weist auch der genutete Führungszapfen 27 einen kleineren Durchmesser auf. Der genutete Führungszapfen 27 besitzt am Übergang zum Führungsteller 09 ein Podest 33, welches einerseits den genuteten Führungszapfen 27 stabilisiert und andererseits einen Anschlag für die Führung der Ventilmembran 02 bildet. Die Führung der Ventilmembran 02 in der Führungsöffnung 03 der Führungsscheibe 32 erlaubt eine ungehinderte Führung in der Achse des genuteten Führungszapfens 27 bis zum Podest 33.

Zwischen dem Ventildeckel 04 und dem Führungsteller 09 ist ein axiales Spiel 34 vorhanden. Aufgrund dieses axialen Spieles 34 kann die Ventilmembran 02 in der Verschlussstellung zusätzlich zusammengepresst werden, sodass eine höhere Schließkraft sowohl zwischen der umlaufenden Kante 11 der Ventilmembran 02 und dem Führungsteller 09 als auch in der Auflagefläche 06 erzielt werden kann. Dieses Zusammenpressen der Ventilmembran 02 kann durch ein starkes Aufsetzen der Flasche auf das Ventil 01 bewirkt werden, da so das Produkt mit seiner Masse und dem entstandenen Impuls auf die Produktseite des Führungstellers 09 wirkt. Das Zusammenpressen der Ventilmembran 02 kann auch durch ein Schockschütteln oder einen ähnlichen Vorgang bewirkt werden. Wenn zur Erzielung der Spendestellung der Druck im Behältnis und folglich im Hohlraum 16 steigt, drückt die Ventilmembran 02 den Führungsteller 09 und den Ventildeckel 04 im Rahmen des axialen Spiels 34 wieder auseinander. Infolgedessen kann die Dichtlippe 29 der Ventilmembran 02 von der Auflagefläche 06 in der Buchse 31 des Ventildeckels 04 abheben, sodass das Produkt in der Richtung 22 ausströmen kann.

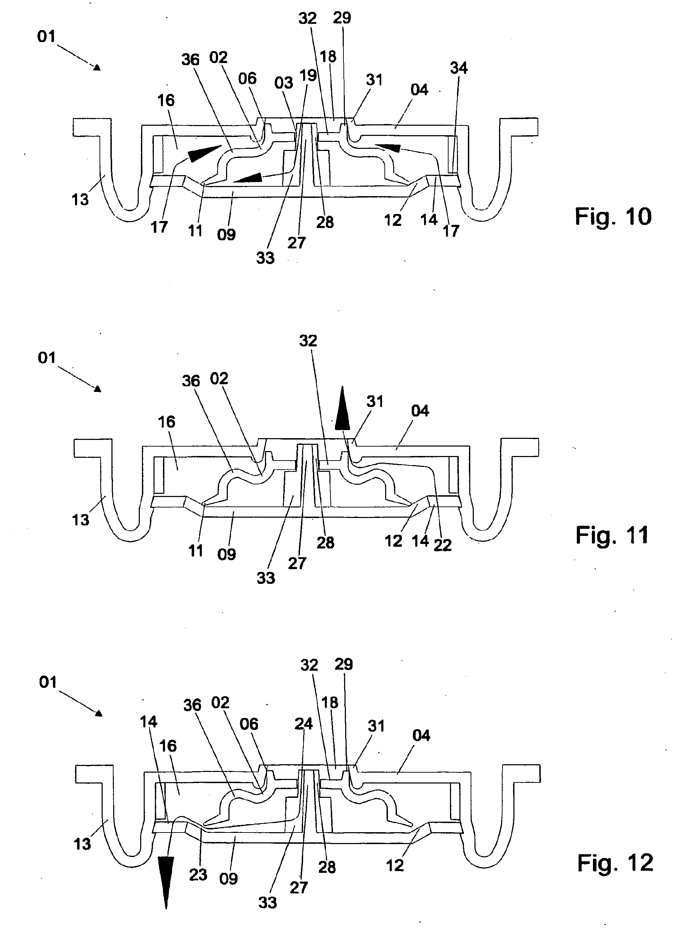

Die Fig. 10 bis 12 zeigen Querschnittsdarstellungen einer vierten Ausführungsform des erfindungsgemäßen selbstschließenden Ventils 01. Fig. 10 zeigt das Ventil 01 in einer Verschlussstellung. Fig. 11 zeigt das Ventil 01 in einer Spendestellung und Fig. 12 zeigt das Ventil 01 in einer Rücksaugstellung. Die in den Fig. 10 bis 12 verwendeten Bezugszeichen stimmen mit den in den Fig. 7 bis 9 verwendeten Bezugszeichen überein, insofern sie die gleichen Merkmale kennzeichnen.

Die in den Fig. 10 bis 12 gezeigte Ausführungsform unterscheidet sich von der in den Fig. 7 bis 9 gezeigten Ausführungsform nur hinsichtlich einer speziellen Ausformung der Ventilmembran 02. Die Ventilmembran 02 weist im Bereich zwischen der Dichtlippe 29 und der umlaufenden Kante 11 eine umlaufende Wölbung 36 in Richtung des Ventildeckels 04 auf. Die Wölbung 36 führt dazu, dass der beim Übergang in die Spendestellung im Hohlraum 16 vorhandene Druck des Produktes eine Verformung der Ventilmembran 02 im Bereich zwischen der Dichtlippe 29 und der Wölbung 36 bewirkt. Diese Verformung erlaubt ein weites Abheben der Ventilmembran 02 von der Auflagefläche 06 der Buchse 31 des Ventildeckels 04, ohne dass hierfür eine größere Kraft erforderlich ist. Fig. 11 zeigt das Ventil 01 in der Spendestellung, bei der die Ventilmembran 02 im Bereich zwischen der Dichtlippe 29 und der Wölbung 36 weit in Richtung des Führungstellers 09 verformt ist. Diese Ausführungsform des erfindungsgemäßen Ventils 01 gewährleistet eine besonders leichte und sichere Ausgabe des Produktes. Die Wölbung 36 bewirkt weiterhin ein erleichtertes Abheben der umlaufenden Kante 11 der Ventilmembran 02 vom Führungsteller 09, da sich die Ventilmembran 02 im Bereich zwischen der umlaufenden Kante 11 und der Wölbung 36 ebenfalls leicht verformen lässt. Folglich ist bei dieser Ausführungsform des erfindungsgemäßen Ventils 01 eine Luftrücksaugung bereits bei einem sehr kleinen Unterdruck im Inneren des Behältnisses gewährleistet.

### Bezugszeichenliste

- 01: selbstschließendes Ventil
- 02: Ventilmembran
- 03: Führungsöffnung
- 04: Ventildeckel
- 05: -
- 06: Auflagefläche auf dem Ventildeckel
- 07: Haltekragen
- 08: Führungszapfen
- 09: Führungsteller
- 10: -
- 11: umlaufende Kante der Ventilmembran
- 12: schräge Auflauffläche des Führungstellers
- 13: Befestigungsrahmen
- 14: Durchtrittsöffnung
- 16: Hohlraum zwischen Ventilmembran und Ventildeckel
- 17: Strömung in Richtung des Ventildeckels
- 18: Austrittsöffnung
- 19: Luftströmung zur umlaufenden Kante der Ventilmembran
- 21: Durchtrittsspalt
- 22: Fließrichtung des Produktes
- 23: Luftspalt
- 24: Luftströmung
- 26: Rohransatz
- 27: genuteter Führungszapfen
- 28: Nut
- 29: Dichtlippe
- 31: konische Buchse
- 32: Führungsscheibe
- 33: Podest
- 34: axiales Spiel
- 36: Wölbung der Ventilmembran

## Patentansprüche

1. Selbstschließendes Ventil (01) zur Ausgabe eines fließfähigen Produktes aus einem Volumen, umfassend:
- einen Ventildeckel (04) mit einer Austrittsöffnung (18);
- einen Führungsteller (09), der auf der Produktseite des Ventildeckels (04) und von diesem beabstandet angeordnet ist;
- eine Ventilmembran (02), die zwischen dem Ventildeckel (04) und dem Führungsteller (09) gehaltert ist, wobei die Ventilmembran (02) aufgrund erzeugter Druckunterschiede zwischen einer Verschlussstellung, einer Spendestellung und einer Rücksaugstellung wechseln kann;
- einen Hohlraum (16) zwischen dem Ventildeckel (04) und der Ventilmembran (02), welcher in der Verschlussstellung und in der Rücksaugstellung durch Anlage der Ventilmembran (02) am Ventildeckel (04) gegenüber der Austrittsöffnung (18) verschlossen ist und in der Spendestellung durch Abheben der Ventilmembran (02) vom Ventildeckel (04) gegenüber der Austrittsöffnung geöffnet ist;
- mindestens eine Durchtrittsöffnung (14), die sich vom Volumen des Produktes bis zum Hohlraum (16) erstreckt; und
- einen Kanal zur Luftrücksaugung, welcher in der Rücksaugstellung zumindest durch die Austrittsöffnung (18) und einen beim Abheben der Ventilmembran (02) vom Führungsteller (09) geöffneten Luftspalt (23) gebildet ist, wobei dieser Kanal zur Luftrücksaugung in der Verschlussstellung und in der Spendestellung durch Auflage der Ventilmembran (02) auf dem Führungsteller (09) verschlossen ist;
**dadurch gekennzeichnet, dass** die Ventilmembran (02) weiterhin eine Führungsöffnung (03) besitzt, die in der Rücksaugstellung einen Teil des Kanals zur Luftrücksaugung bildet.

2. Selbstschließendes Ventil (01) nach Anspruch 1, **dadurch gekennzeichnet, dass** die Ventilmembran (02) durch ein Führungselement (08; 27) geführt ist, wobei das Führungselement (08; 27) in die Führungsöffnung (03) der Ventilmembran (02) hineinragt und gleichzeitig einen Teil des Kanals zur Luftrücksaugung bildet.

3. Selbstschließendes Ventil (01) nach Anspruch 1 oder 2, **dadurch gekennzeichnet, dass** die Austrittsöffnung (18), die Ventilmembran (02) und die Führungsöffnung (03) kreisförmig und konzentrisch ausgeführt sind.

4. Selbstschließendes Ventil (01) nach einem der Ansprüche 1 bis 3, **dadurch gekennzeichnet, dass** die Ventilmembran (02) die Form einer Tellerfeder aufweist, welche in der Verschlussstellung in die Ausgaberichtung gewölbt ist.

5. Selbstschließendes Ventil (01) nach einem der Ansprüche 2 bis 4, **dadurch gekennzeichnet, dass** die Führungsöffnung (03) der Ventilmembran (02) einen Haltekragen (07) aufweist, wobei die Ventilmembran (02) durch den Haltekragen (07) am Führungselement (08; 27) geführt ist.

6. Selbstschließendes Ventil (01) nach einem der Ansprüche 2 bis 5, **dadurch gekennzeichnet, dass** die Ventilmembran (02) eine konzentrische Führungsscheibe (32) aufweist, wobei die Führungsöffnung (03) in der Führungsscheibe (32) angeordnet ist.

7. Selbstschließendes Ventil (01) nach einem der Ansprüche 1 bis 6, **dadurch gekennzeichnet, dass** die Ventilmembran (02) eine umlaufende Dichtlippe (29) aufweist, wobei die Dichtlippe (29) in der Verschlussstellung an eine konusförmige Innenfläche einer Buchse (31) der Austrittsöffnung (18) des Ventildeckels (04) gepresst ist.

8. Selbstschließendes Ventil (01) nach einem der Ansprüche 1 bis 7, **dadurch gekennzeichnet, dass** der Führungsteller (09) gegenüber dem Ventildeckel (04) mit einem axialen Spiel (34) angeordnet ist.

9. Selbstschließendes Ventil (01) nach einem der Ansprüche 2 bis 8, **dadurch gekennzeichnet, dass** das Führungselement durch mehrere voneinander beabstandete, auf dem Führungsteller (09) befestigte Führungszapfen (08) gebildet ist.

10. Selbstschließendes Ventil (01) nach einem der Ansprüche 2 bis 8, **dadurch gekennzeichnet, dass** das Führungselement durch einen genuteten Führungszapfen (27) gebildet ist, der auf seiner Mantelfläche mindestens eine Nut (28) aufweist, die gleichzeitig einen Teil des Kanals zur Luftrücksaugung bildet.

11. Selbstschließendes Ventil (01) nach einem der Ansprüche 1 bis 10, **dadurch gekennzeichnet, dass** die Ventilmembran (02) eine umlaufende konzentrische Wölbung (36) in Richtung des Ventildeckels (04) aufweist.

12. Selbstschließendes Ventil (01) nach einem der Ansprüche 1 bis 11, **dadurch gekennzeichnet, dass** die Ventilmembran (02) aus einem Silikonkunststoff oder einem thermoplastischen Elastomer gefertigt ist.

13. Selbstschließendes Ventil (01) nach einem der Ansprüche 1 bis 12, **dadurch gekennzeichnet, dass** der Ventildeckel (04) mit einem Befestigungsrahmen (13) einstückig ausgebildet ist, welcher in der Flaschenhalsöffnung einer Quetschflasche befestigbar ist.

14. Selbstschließendes Ventil (01) nach Anspruch 13, **dadurch gekennzeichnet, dass** der Ventildeckel (04) und der Befestigungsrahmen (13) einstückig mit der Quetschflasche ausgebildet sind.

15. Selbstschließendes Ventil (01) nach einem der Ansprüche 1 bis 14, **dadurch gekennzeichnet, dass** die Ventilmembran (02) mit ihrem äußeren Umfang in der Verschlussstellung an einer in Richtung der Ventilmembran (02) geneigten, umlaufenden Auflauffläche (12) des Führungstellers (09) anliegt.

## Claims

1. Self-closing valve (01) for dispensing a free-flowing product from a volume, comprising:
- a valve cap (04) with an outlet opening (18);
- a guide disk (09), which is arranged on the product side of the valve cap (04) and at a distance from it;
- a valve membrane (02), which is supported between the valve cap (04) and the guide disk (09), while the valve membrane (02) can change between a closing position, a dispensing position and a back suction position based on pressure differences created;
- a cavity (16) between the valve cap (04) and the valve membrane (02), which in the closed position and in the back suction position is sealed off against the outlet opening (18) by the valve membrane (02) on the valve cap (04) bearing against the outlet opening (18) and in the dispensing position it, is opened by the lifting off of the valve membrane (02) of the valve cap (04) from the outlet opening;
- at least one passage opening (14), which extends from the product volume to the cavity (16); and
- a channel for back sucking of air, which in the back suction position is formed at least by the outlet opening (18) and an air gap (23) which opens up when the valve membrane (02) is lifted off from the guide disk (09), this channel for back sucking of air being closed in the closing position and in the dispensing position by the valve membrane (02) bearing against the guide disk (09);
**characterized in that** the valve membrane (2) furthermore has a guide opening (3) which forms a part of the channel for back sucking air in the back suction position.

2. Self-closing valve (01) per claim 1, **characterized in that** the valve membrane (02) is guided by a guide element (08; 27), wherein the guide element (08; 27) projects into the guide opening (03) of the valve membrane (02) and at the same time forms part of the channel for the back suction of air.

3. Self-closing valve (01) per claim 1, **characterized in that** the outlet opening (18), the valve membrane (02) and the guide opening (03) are circular and concentric in configuration.

4. Self-closing valve (01) per one of claims 1 to 3, **characterized in that** the valve membrane (02) has the shape of a disk spring, which is cambered in the discharge direction in the closed position.

5. Self-closing valve (01) per one of claims 2 to 4, **characterized in that** the guide opening (03) of the valve membrane (02) has a support collar (07), while the valve membrane (02) is guided by the support collar (07) on the guide element (08; 27).

6. Self-closing valve (01) per one of claims 2 to 5, **characterized in that** the valve membrane (02) has a concentric washer (32), and the guide opening (03) is arranged in the washer (32).

7. Self-closing valve (01) per one of claims 1 to 6, **characterized in that** the valve membrane (02) has an encircling sealing lip (29), and the sealing lip (29) in the closed position is pressed against a conically shaped inner surface of a bushing (31) of the outlet opening (18) of the valve cap (04).

8. Self-closing valve (01) per one of claims 1 to 7, **characterized in that** the guide disk (09).is arranged with an axial play (34) relative to the valve cap (04).

9. Self-closing valve (01) per one of claims 2 to 8, **characterized in that** the guide element is formed by several guide pins (08) spaced apart from each other and fastened to the guide disk (09).

10. Self-closing valve (01) per one of claims 2 to 8, **characterized in that** the guide element is formed by a grooved guide pin (27), which has at least one groove (28) on its envelope surface, forming at the same time part of the channel for back suction of air.

11. Self-closing valve (01) per one of claims 1 to 10, **characterized in that** the valve membrane (02) has an encircling concentric camber (36) in the direction of the valve cap (04).

12. Self-closing valve (01) per one of claims 1 to 11, **characterized in that** the valve membrane (02) is made from a silicone plastic or a thermoplastic elastomer.

13. Self-closing valve (01) per one of claims 1 to 12, **characterized in that** the valve cap (04) is made as a single piece with a fastening frame (13), which can be fastened in the bottle neck opening of a squeeze bottle.

14. Self-closing valve (01) per claim 13, **characterized in that** the valve cap (04) and the fastening frame (13) are made as a single piece with the squeeze bottle.

15. Self-closing valve (01) per one of claims 1 to 14, **characterized in that** the valve membrane (02) rests by its outer circumference against an encircling impact surface (12) of the guide disk (09), inclined in the direction of the valve membrane (02), in the closed position.

## Revendications

1. Soupape (01) à fermeture automatique pour la sortie d'un produit fluide d'un volume, comprenant :
- un chapeau de soupape (04) avec une sortie d'ouverture (18) ;
- un plateau de guidage (09) qui est disposé sur le côté produit du chapeau de soupape (04) et espacé de celui-ci ;
- une membrane de soupape (02) qui est fixée entre le chapeau de soupape (04) et le plateau de guidage (09), la membrane de soupape (02) pouvant alterner, du fait de différences de pression générées, entre une position de fermeture, une position de distribution et une position de recirculation ;
- une cavité (16) entre le chapeau de soupape (04) et la membrane de soupape (02), qui est fermée dans la position de fermeture et dans la position de recirculation par l'application de la membrane de soupape (02) sur le chapeau de soupape (04) par rapport à l'ouverture de sortie (18) et est ouverte dans la position de distribution par le soulèvement de la membrane de soupape (02) du chapeau de soupape (04) par rapport à l'ouverture de sortie ;
- au moins une ouverture de passage (14), qui s'étend depuis le volume du produit jusqu'à la cavité (16) ; et
- un conduit pour la recirculation d'air, qui est formé dans la position de recirculation au moins par l'ouverture de sortie (18) et une fente d'aération (23) ouverte lors du soulèvement de la membrane de soupape (02) du plateau de guidage (09), ce conduit pour la recirculation d'air étant fermé dans la position de fermeture et dans la position de distribution par l'application de la membrane de soupape (02) sur le plateau de guidage (09) ;
**caractérisée en ce que** la membrane de soupape (02) présente également une ouverture de guidage (03), qui forme dans la position de recirculation une partie du conduit pour la recirculation d'air.

2. Soupape (01) à fermeture automatique selon la revendication 1, **caractérisée en ce que** la membrane de soupape (02) est guidée par un élément de guidage (08 ; 27), l'élément de guidage (08 ; 27) dépassant à l'intérieur de l'ouverture de guidage (03) de la membrane de soupape (02) et formant en même temps une partie du conduit pour la recirculation d'air.

3. Soupape (01) à fermeture automatique selon la revendication 1 ou 2, **caractérisée en ce que** l'ouverture de sortie (18), la membrane de soupape (02) et l'ouverture de guidage (03) sont conçues de façon circulaire et concentrique.

4. Soupape (01) à fermeture automatique selon l'une quelconque des revendications 1 à 3, **caractérisée en ce que** la membrane de soupape (02) présente la forme d'un ressort à disques, qui est incurvé dans le sens de sortie dans la position de fermeture.

5. Soupape (01) à fermeture automatique selon l'une quelconque des revendications 2 à 4, **caractérisée en ce que** l'ouverture de guidage (03) de la membrane de soupape (02) présente une collerette de retenue (07), la membrane de soupape (02) étant guidée par la collerette de retenue (07) sur l'élément de guidage (08 ; 27).

6. Soupape (01) à fermeture automatique selon l'une quelconque des revendications 2 à 5, **caractérisée en ce que** la membrane de soupape (02) présente un disque de guidage (32) concentrique, l'ouverture de guidage (03) étant disposée dans le disque de guidage (32).

7. Soupape (01) à fermeture automatique selon l'une quelconque des revendications 1 à 6, **caractérisée en ce que** la membrane de diaphragme (02) présente une lèvre d'étanchéité (29) périphérique, la lèvre d'étanchéité (29) étant pressée dans la position de fermeture sur une surface intérieure à forme conique d'une douille (31) de l'ouverture de sortie (18) du chapeau de soupape (04).

8. Soupape (01) à fermeture automatique selon l'une quelconque des revendications 1 à 7, **caractérisée en ce que** le plateau de guidage (09) est disposé en face du chapeau de diaphragme (04) avec un jeu axial (34).

9. Soupape (01) à fermeture automatique selon l'une quelconque des revendications 2 à 8, **caractérisée en ce que** l'élément de guidage est formé par plusieurs tenants de guidage (08) espacés les uns des autres et fixés sur le plateau de guidage (09).

10. Soupape (01) à fermeture automatique selon l'une quelconque des revendications 2 à 8, **caractérisée en ce que** l'élément de guidage est formé par un tenon de guidage (27) rainuré, qui présente sur sa surface d'enveloppe au moins une rainure (28) qui forme une partie du conduit pour le recyclage d'air.

11. Soupape (01) à fermeture automatique selon l'une quelconque des revendications 1 à 10, **caractérisée en ce que** la membrane de diaphragme (02) présente une courbure (36) concentrique périphérique en direction du chapeau de diaphragme (04).

12. Soupape (01) à fermeture automatique selon l'une quelconque des revendications 1 à 11, **caractérisée en ce que** la membrane de soupape (02) est fabriquée à base d'un plastique silicone ou d'un élastomère thermoplastique.

13. Soupape (01) à fermeture automatique selon l'une quelconque des revendications 1 à 12, **caractérisée en ce que** le chapeau de diaphragme (04) est conçu d'une seule pièce avec un cadre de fixation (13) qui peut être fixé dans l'ouverture de goulot d'une bouteille à écraser.

14. Soupape (01) à fermeture automatique selon la revendication 13, **caractérisée en ce que** le chapeau de soupape (04) et la cadre de fixation (13) sont conçus d'une seule pièce avec la bouteille à écraser.

15. Soupape (01) à fermeture automatique selon l'une quelconque des revendications 1 à 14, **caractérisée en ce que** la membrane de soupape (02) s'applique avec son pourtour extérieur dans la position de fermeture sur une surface d'entrée (12) périphérique, inclinée en direction de la membrane de soupape (02), du plateau de guidage (09).
